# EUROPÄISCHE PATENTSCHRIFT

(11) **EP 3 797 181 B1**
(45) Veröffentlichungstag und Bekanntmachung des Hinweises auf die Patenterteilung: **16.11.2022**
(21) Anmeldenummer: 19726624.0
(22) Anmeldetag: 21.05.2019
(51) Int. Cl.: C23C 2/08, C23C 2/02, C23C 2/28, H01R 13/03, H01R 4/58, C23C 30/00

(54) **KUPFERBAND ZUR HERSTELLUNG VON ELEKTRISCHEN KONTAKTEN UND VERFAHREN ZUR HERSTELLUNG EINES KUPFERBANDES UND STECKVERBINDER**
COPPER STRIP FOR PRODUCING ELECTRICAL CONTACTS AND METHOD FOR PRODUCING A COPPER STRIP AND PLUG-IN CONNECTOR
BANDE DE CUIVRE POUR LA FABRICATION DE CONTACTS ÉLECTRIQUES, PROCÉDÉ POUR LA FABRICATION D'UNE BANDE DE CUIVRE ET CONNECTEUR ENFICHABLE

(30) Priorität: 23.05.2018 DE 102018208116
(43) Veröffentlichungstag der Anmeldung: 31.03.2021
(73) Patentinhaber: Aurubis Stolberg GmbH & Co. KG, 52224 Stolberg (DE)
(72) Erfinder: CAPPI, Benjamin, 4721 Neu-Moresnet (BE); LEHMANN, Helge, 52393 Hürtgenwald (DE); ZEIGER, Karl, 52249 Eschweiler (DE)
(74) Vertreter: Müller Verweyen
(86) Internationale Anmeldenummer: PCT/EP2019/063091
(87) Internationale Veröffentlichungsnummer: WO 2019/224197

(56) Entgegenhaltungen:
- EP-A1- 1 157 820
- EP-A1- 1 284 301
- EP-A2- 0 443 291
- EP-A2- 1 158 618
- WO-A1-2008/074344
- WO-A2-2008/157529
- DE-A1- 19 752 329

## Beschreibung

Kupferband zur Herstellung von elektrischen Kontakten und Verfahren zur Herstellung eines Kupferbandes und Steckverbinder Die vorliegende Erfindung betrifft ein Kupferband zur Herstellung von elektrischen Kontakten mit einer Beschichtung aus Zinn mit den Merkmalen des Oberbegriffs von Anspruch 1 und ein Verfahren zur Herstellung eines Kupferbandes mit den Merkmalen des Oberbegriffs von Anspruch 9 und einen Steckverbinder mit den Merkmalen des Oberbegriffs von Anspruch 13.

Kupferbänder dienen zur Herstellung von elektrischen Kontakten in Steckkontaktverbindungen. Solche Steckkontaktverbindungen kommen in unterschiedlichen Anwendungsbereichen zum Einsatz wie z.B. in der Kraftfahrzeugelektrik, in der Nachrichtentechnik oder in der Industrieanlagenelektronik. Die elektrischen Kontakte in den Steckkontaktverbindungen dienen der Verwirklichung der elektrisch leitenden Verbindung und bilden damit das wesentliche Bauteil der Steckkontaktverbindung. Aus diesem Grunde unterliegen die elektrischen Kontakte erhöhten Anforderungen hinsichtlich der Zuverlässigkeit der elektrischen Verbindung bis zu einer vorbestimmten Lebensdauer und nach einer vorbestimmten Anzahl von Steckzyklen bei verschiedenen Temperatur- und Feuchtigkeits- und Belastungsbedingungen. Ferner fordern insbesondere die Kraftfahrzeughersteller, dass die Steckkräfte der Steckverbindungen vorgegebene Maximalwerte nicht überschreiten.

Die Kupferbänder und die daraus hergestellten elektrischen Kontakte sind aus Kupfer oder einer Kupferlegierung als Basiswerkstoff hergestellt, welches sich aufgrund der besonders guten elektrischen Leitfähigkeit als vorteilhaft herausgestellt hat. Zum Schutz gegen Korrosion und Verschleiß sowie zur Senkung des Übergangswiderstandes und zur Reduzierung der Stecckräfte hat es sich dabei ferner als vorteilhaft herausgestellt, die elektrischen Kontakte mit einer Beschichtung aus Zinn zu versehen, was z.B. durch eine Tauchverzinnung der Kupferbänder verwirklicht werden kann.

Die elektrischen Kontakte werden dann üblicherweise aus den vorgefertigten, beschichteten Kupferbändern herausgestanzt und in einem Mehrfachumformwerkzeug in einem Kaltumformprozess zu der vorbestimmten Form geformt.

Aufgrund der von den Kraftfahrzeugherstellern geforderten hohen Anforderungen an die Lebensdauer und die Funktionsfähigkeit der elektrischen Kontakte im Allgemeinen auch unter extremen Bedingungen kann es problematisch sein, die geforderten Anforderungen hinsichtlich der Temperaturbeständigkeit, der Relaxationsbeständigkeit, der Korrosionsbeständigkeit und der Haftfestigkeit der Beschichtung zu erfüllen. Dabei ist insbesondere die Haftfestigkeit der Beschichtung von besonderer Bedeutung, da durch das Lösen der Beschichtung (Peeling off) die für die elektrisch leitende Verbindung erforderliche Kontaktfläche reduziert wird oder sogar gänzlich unterbrochen werden kann. Das Lösen der Beschichtung kann dabei durch Diffusionsvorgänge zwischen dem Kupfer-Basismaterial und der Zinnbeschichtung und der dadurch erzeugten Kirkendall-Poren verstärkt oder verursacht sein.

Solche beschichteten Metall- oder auch Kupferbänder sind z.B. aus den Druckschriften EP 0 443 291 A2, EP 1 288 321 B1, EP 1 158 618 B1 und EP 1 157 820 B1 bekannt.

Bei den dortigen Kupferbändern werden zur Verbesserung der Haftfestigkeit der Beschichtung dem dort als Basiswerkstoff bezeichneten Kupfer verschiedene Legierungsbestandteile zugegeben, durch welche das Diffusionsverhalten in der intermetallischen Phase zwischen dem Kupfer und der Beschichtung soweit beeinflusst wird, dass die Bildung der für die Ablösung ursächlichen Cu3Sn-Phase oder auch ε-Phase aus der Cu6Sn5-Phase oder auch η-Phase reduziert wird.

Ein Nachteil dieser Lösung ist jedoch, dass durch die Modifikation des Basiswerkstoffs bestehende Werkstoffnormen für den Basiswerkstoff in Extremfällen nicht eingehalten werden können. Ferner können die Eigenschaften des Basiswerkstoffs wie z.B. die elektrische Leitfähigkeit nachteilig beeinflusst werden. Darüber hinaus kann diese Lösung nicht bei der Verwendung von Reinkupfer als Basiswerkstoff wie z.B. Cu-ETP oder Cu-OFE angewendet werden.

Vor diesem Hintergrund liegt der Erfindung die Aufgabe zugrunde, ein Kupferband zur Herstellung von elektrischen Kontakten mit einer Beschichtung aus Zinn bereitzustellen, welches eine verbesserte und insbesondere dauerhafte Haftfestigkeit der Beschichtung aufweisen soll und außerdem kostengünstig herzustellen ist. Ferner liegt der Erfindung die Aufgabe zugrunde, ein Verfahren zur Herstellung eines Kupferbandes mit einer verbesserten und dauerhaften Haftfestigkeit der Beschichtung bereitzustellen. Außerdem liegt der Erfindung die Aufgabe zugrunde, einen verbesserten Steckverbinder aus einem solchen Kupferband bereitzustellen.

Zur Lösung der Aufgabe wird ein Kupferband mit den Merkmalen von Anspruch 1 vorgeschlagen. Weitere bevorzugte Weiterentwicklungen sind den Unteransprüchen, der Figur und der zugehörigen Beschreibung zu entnehmen.

Erfindungsgemäß wird zur Lösung der Aufgabe ein Kupferband zur Herstellung von elektrischen Kontakten, mit einem Basiswerkstoff aus Kupfer oder einer Kupferlegierung, und einer Beschichtung aus Zinn vorgeschlagen, wobei die Beschichtung aus Zinn einen Anteil von unlöslichen, ausscheidungsbildenden Elementen von 0,003 bis 1,0, bevorzugt bis 0,5, bevorzugt bis 0,05, besonders bevorzugt bis 0,01 Gewichtsprozent aufweist, und wobei das unlösliche, ausscheidungsbildende Element Silber in einem Anteil von 0,08 bis 0,5 Gewichtsprozent in Form einer Ag₃Sn Phase in der Beschichtung vorliegt.

Der Vorteil der vorgeschlagenen Lösung ist zunächst darin zu sehen, dass die unlöslichen, ausscheidungsbildenden Elemente bewusst in der Beschichtung, bzw. der Zinnschicht und nicht wie im Stand der Technik in dem Basiswerkstoff vorgesehen sind. Da die Beschichtung, bzw. die Zinnschicht erheblich dünner als der Basiswerkstoff ausgebildet ist, reicht damit eine erheblich geringere Menge der unlöslichen, ausscheidungsbildenden Elemente aus, als dies bei der Zugabe zu dem Basiswerkstoff erforderlich ist, um den gewünschten Effekt herbeizuführen. Der Effekt der Verbesserung der Haftfestigkeit basiert darauf, dass die unlöslichen, ausscheidungsbildenden Elemente bewusst eine intermetallische Phase mit dem Zinn oder selbst Ausscheidungen bilden, welche die Entstehung der Cu3Sn-Phase (ε-Phase) vermindert oder unterdrückt. Durch diesen Effekt wird das Risiko der Entstehung der sogenannten Kirkendall-Poren gesenkt, wodurch der Peeling-Off Effekt reduziert und die Haftfestigkeit der Beschichtung auf den Basiswerkstoff verbessert wird. Da die unlöslichen, ausscheidungsbildenden Elemente bewusst in der Beschichtung, bzw. der Zinnschicht vorgesehen sind, tritt der durch diese bewusst herbeigeführte Effekt gezielt im Bereich und nahe der für die Haftfestigkeit besonders wichtigen Grenzschicht zwischen dem Basiswerkstoff und der Beschichtung auf, und die Elemente werden zur Erzielung des herbeizuführenden Effektes besonders gut ausgenutzt. Die Beschichtung verhindert dadurch praktisch selbst ihren Ablöseprozess von dem Basiswerkstoff. Ferner ist ein Vorteil darin zu sehen, dass der Basiswerkstoff also das Kupfer oder die Kupferlegierung für die erfindungsgemäße Lösung nicht verändert zu werden braucht. Es kann praktisch Kupfer oder jede Kupferlegierung ohne eine spezielle Zugabe von Elementen verwendet werden, soweit sie den Anforderungen an die elektrische Leitfähigkeit genügt. Außerdem wird die Kupferlegierung dadurch nicht durch die zuzugebenden Elemente verändert, sodass diese nicht hinsichtlich ihrer elektrischen bzw. technologischen Eigenschaften negativ verändert wird.

Weiter wird vorgeschlagen, dass die ausscheidungsbildenden Elemente zusätzlich durch eines oder mehrere der folgenden Elemente gebildet sind: Germanium, Nickel, Cobalt in einem Anteil von jeweils 0,003 bis 0,5 Gewichtsprozent. Silber (Ag) ist bereits in geringsten Mengen in dem Zinn (Sn) unlöslich und bildet mit dem Zinn eine intermetallische Phase Ag3Sn, welche die Bildung der Cu3Sn-Phase hemmt. Ein vergleichbarer Effekt kann auch durch die Verwendung von Germanium (Ge), Nickel (Ni) und Cobalt (Co) erreicht werden, welche vergleichbare intermetallische Phasen oder Ausscheidungen bilden, die wiederum die Bildung der Cu3Sn-Phase hemmen. Da die Elemente wie z.B. Silber sehr teuer sind, ist es von besonderem Vorteil, dass die Elemente bewusst nur in der Beschichtung und nicht in dem Basiswerkstoff vorgesehen sind. Die Beschichtung des Kupferbandes weist ein erheblich geringeres Volumen als der Basiswerkstoff auf, sodass zur Erzielung des gewünschten Effektes eine erheblich geringere Menge des zugegebenen Elementes erforderlich ist, als dies bei einer Verwendung des Elementes in dem Basiswerkstoff erforderlich wäre. Dadurch können die Herstellkosten des Kupferbandes erheblich reduziert werden. Sofern mehrere der vorgeschlagenen Elemente vorgesehen sind, sollte die Summe der Gewichtsanteile der einzelnen Elemente die nach Anspruch 1 vorgeschlagenen Grenzwerte nicht überschreiten und auch nicht unterschreiten.

Gemäß der Erfindung vorliegt das unlösliche, ausscheidungsbildende Element Silber in einem Anteil von 0,08 bis 0,5 Gewichtsprozent in Form einer Ag3Sn Phase in der Beschichtung. Silber hat sich als unlösliches, ausscheidungsbildendes Element als besonders bevorzugt herausgestellt, da Silber eine Ag3Sn Phase bildet, welche die Diffusion des Kupfers aus der Cu6Sn5 Phase und damit die Bildung der nachteiligen Cu3Sn Phase besonders gut hemmt. Dabei wird insbesondere die Diffusion von Kupfer und Zinn im Bereich der intermetallischen Phase beeinflusst und dadurch die Bildung der nachteiligen Cu3Sn Phase gehemmt. Dabei hat sich der vorgeschlagene Anteil des Silbers als besonders effektiv bei einer gleichzeitig möglichst geringen Menge des teuren Silbers herausgestellt. Die silberhaltige Ag3Sn Phase bildet sich dabei bevorzugt im Bereich der Cu6Sn5 Partikel bzw. um diese herum aus und hemmt dadurch das Anwachsen der Cu3Sn Phase und somit das Risiko der Entstehung der Kirkendall Poren besonders effektiv.

Dabei ist die Ag3Sn Phase in der Beschichtung bevorzugt in Partikeln mit einem Flächenmittelwert von 0,01 bis 0,03 µm², bevorzugt von 0,0140 bis 0,0180 µm² vorhanden, welche sich als ausreichend zur Hemmung des Cu3Sn Wachstums herausgestellt hat. Dieser Flächenwert kann sowohl durch die Bemessung des Anteils des Silbers in der Beschichtung als auch durch die Wahl der Abkühlform des Kupferbandes eingestellt werden. Die Ag3Sn-Phase kann dabei sowohl in einer Nadelstruktur als auch in Plättchenform in dem Gefüge vorliegen, wobei der Flächenmittelwert jeweils für einen geschlossenen Abschnitt der Ag3Sn Phase in dem Gefüge gilt.

Ferner ist die Ag3Sn Phase in der Beschichtung bevorzugt in Partikelgrößen mit einem gemittelten Umfang von 0,2 bis 0,8 µm bevorzugt von 0,4 bis 0,6 µm vorhanden, welche sich als ausreichend zur Hemmung des Cu3Sn Wachstums herausgestellt hat. Dieser Umfangswert kann ebenfalls sowohl durch die Bemessung des Anteils des Silbers in der Beschichtung als auch durch die Wahl der Abkühlform des Kupferbandes eingestellt werden. Ebenso wie zu dem Flächenmittelwert gilt auch hier, dass die Ag3Sn Phase sowohl in einer Nadelstruktur als auch in einer Plättchenstruktur vorliegen kann. Auch in diesem Fall liegt die Ag3Sn Phase in der Nadelstruktur oder der Plättchenstruktur in geschlossenen Abschnitten vor, und der vorgeschlagene Umfangswert ist der gemittelte Umfangswert einer Nadel bzw. eines Plättchens in dem Gefüge.

Weiter wird vorgeschlagen, dass in der Beschichtung und/oder in einer an den Basiswerkstoff angrenzenden Grenzschicht der Beschichtung ein Anteil des Kupfers in einer Cu6Sn5 Phase vorliegt und die Ag3Sn Phase die Cu6Sn5 Phase umfasst. Die Cu6Sn5 Phase wird damit durch die Ag3Sn Phase gegenüber dem aus der Grenzschicht diffundierenden Kupfer isoliert, so dass dadurch die Entstehung der für die Kirkendall-Poren ursächliche Cu3Sn Phase besonders gut gehemmt werden kann.

Weiter wird vorgeschlagen, dass die ausscheidungsbildenden Elemente durch eines oder mehrere der folgenden Elemente gebildet sind: Antimon oder Wismut in einem Anteil von 0,02 bis 1,0 Gewichtsprozent. Sofern mehrere der vorgeschlagenen Elemente vorgesehen sind, sollte die Summe der Gewichtsanteile der einzelnen Elemente die nach Anspruch 1 vorgeschlagenen Grenzwerte nicht überschreiten und auch nicht unterschreiten. Durch die Verwendung von Wismut und Antimon in dem vorgeschlagenen Gewichtsanteil kann ein vergleichbarer Effekt erzielt werden, wie dies durch die Verwendung von Silber, Germanium, Cobalt und Nickel erreicht wird, wobei selbstverständlich auch eine Kombination der beschriebenen Elemente denkbar ist.

Die Kupferlegierung weist neben den entsprechend der Werkstoffnorm standardmäßig erlaubten Elementzugaben keine weiteren, die Interdiffusion des Kupfers beeinflussenden Elementzugaben auf, sodass der herbeizuführende Effekt ausschließlich ausgehend von der Beschichtung bewirkt wird. Ferner wird die positive Eigenschaft der Kupferlegierung hinsichtlich der Stromtragfähigkeit und der elektrischen Leitfähigkeit im Allgemeinen dadurch nicht nachteilig verändert.

Weiter wird vorgeschlagen, dass die Beschichtung eine höhere Härte als der Basiswerkstoff aufweist. Durch die höhere Härte der Beschichtung ist das Kupferband widerstandsfähiger gegenüber äußeren mechanischen Einwirkungen und insbesondere gegenüber einem Abrieb und Verschleiß. Die Ausbildung der höheren Härte wird hier durch den Zusatz der unlöslichen, ausscheidungsbildenden Elemente unterstützt, so dass der Zusatz dieser Elemente nicht nur den Vorteil der Verminderung der Entstehung der Kirkendall Poren sondern zusätzlich auch den Vorteil von verbesserten mechanischen Eigenschaften aufweist. Die höhere Härte kann neben dem Zusatz der ausscheidungsbildenden Elemente auch durch eine Auslagerung des Kupferbandes bei einer bestimmten Temperatur und über einen bestimmten Zeitraum unterstützt werden. Eine solche Auslagerung kann z.B. über einen Zeitraum von 500 bis 1500 h bevorzugt von 1000 h bei einer Temperatur von 80 bis 150 °C bevorzugt bei 130 °C erfolgen. Durch die Auslagerung wird es ermöglicht, dass die Cu-Sn Phasen soweit anwachsen können, dass möglichst kein freies Sn in der Beschichtung mehr vorhanden ist. Durch diese durch das Vorhandensein der Ag3Sn Phase bedingte Gefügeumwandlung während der Auslagerung wird die Härte der Beschichtung gegenüber dem Ausgangszustand bewusst erhöht, so dass die Härte der Beschichtung anschließend insbesondere höher als die Härte des Basiswerkstoffs ist. Die Gefügeumwandlung umfasst ein Durchwachsen der intermetallischen Phase in Form eines Diffusionsprozesses, welcher durch die Temperatur und die Zeit bedingt ist. Die Gefügeumwandlung zu der höheren Härte findet grundsätzlich auch ohne das Vorhandensein der Ag3Sn Phase statt, sie wird aber durch die Ag3Sn Phase begünstigt, so dass sich das Vorhandensein der Ag3Sn auch günstig auf die Ausbildung der vorteilhaften höheren Härte auswirkt. Dabei kann die Auslagerung und die Gefügeumwandlung nicht nur unter den genannten kontrollierten Bedingungen, sondern zusätzlich auch durch einen Transport des Kupferbandes über eine größere Wegstrecke z.B. im Wege einer Verschiffung oder auch durch den Gebrauch des Kupferbandes in der weiterverarbeiteten Form z.B. als Steckverbinder also über einen vergleichsweise langen Zeitraum stattfinden. Wichtig für die Gefügeumwandlung ist nur, dass das Gefüge in der Beschichtung des Kupferbandes oder in dem daraus gefertigten Produkt in einer thermischen Behandlung, welche auch durch eine ausreichend lange Abkühlphase verwirklicht sein kann, entsprechend umgewandelt wird, und sich dadurch die höhere Härte einstellt. Die Auslagerung bzw. die Abkühlung unter kontrollierten Bedingungen oder auch durch den einfachen Gebrauch stellt eine thermisch bedingte Gefügeumwandlung dar, durch welche die höhere Härte bewirkt wird. In jedem Fall hat die anschließend vorhandene höhere Härte den Vorteil einer erhöhten Widerstandsfähigkeit des Kupferbandes und des daraus gefertigten Produktes.

Weiter wird zur Lösung der Aufgabe ein Verfahren zur Herstellung eines Kupferbandes zur Herstellung von elektrischen Kontakten, mit einem Basiswerkstoff aus einer Kupferlegierung, und einer Beschichtung aus Zinn vorgeschlagen, bei der die Beschichtung aus Zinn in einem Tauchverfahren und/oder einem Galvanikverfahren mit einem Anteil von unlöslichen, ausscheidungsbildenden Element Silber in einem Anteil von 0,08 bis 0,5 Gewichtsprozent in Form einer Ag₃Sn Phase in der Beschichtung auf den Basiswerkstoff aufgetragen wird. Durch das vorgeschlagene Verfahren kann jede Kupferlegierung mit einer Beschichtung aus Zinn mit einer verbesserten Haftfestigkeit versehen werden, ohne dass sie dazu verändert werden muss. Die Verbesserung der Haftfestigkeit der Beschichtung wird ausschließlich durch die Beschichtung selbst bewirkt. Dabei bieten sich sowohl Tauchverfahren als auch Galvanikverfahren zu einem gleichmäßigen, großflächigen und kostengünstigen Auftrag der Beschichtung in einer vorbestimmten, möglichst geringen Dicke an. Als ein mögliches Tauchverfahren ist z.B. ein Feuerverzinnungsprozess denkbar, bei dem die Beschichtung während des Beschichtungsprozesses flüssig ist, und die gewünschte Gefügestruktur sich dann bei der Abkühlung selbsttätig ausbildet.

Weiter wird vorgeschlagen, dass die unlöslichen, ausscheidungsbildenden Elemente in einem ersten Schritt in dem Galvanikverfahren auf dem Basiswerkstoff abgeschieden werden, und die Beschichtung aus Zinn in einem zweiten Schritt durch das Tauchverfahren aufgetragen wird. Die ausscheidungsbildenden, in dem Zinn unlöslichen Elemente werden damit zuerst in einem sehr dünnen Überzug auf das Kupferband bzw. den durch die Kupferlegierung gebildeten Basiswerkstoff aufgetragen, bevor die eigentliche durch das Zinn gebildete Beschichtung in dem Tauchverfahren anschließend aufgebracht wird. Die für die Verbesserung der Haftfestigkeit ursächlichen Elemente bzw. die dadurch gebildete Phase der Elemente in Verbindung mit dem Zinn wird damit unmittelbar zwischen der Kupferlegierung und dem Zinn gebildet, sodass die zur Bildung der Cu3Sn-Phase erforderliche Diffusion des Kupfers unmittelbar in der Verbindungszone der Beschichtung zu der Kupferlegierung unterbunden bzw. gehemmt wird. Der galvanisierte Überzug der Kupferlegierung mit den unlöslichen, ausscheidungsbildenden Elementen bildet zusammen mit dem Zinn eine Zwischenphase, welche als Sperrschicht für das Kupfer dient. Zusätzlich ist es auch denkbar, dass zwischen dem Basismaterial und der Beschichtung eine Zwischenschicht vorgesehen ist. Für den Fall, dass die Zwischenschicht aus Kupfer gebildet ist oder Kupferanteile aufweist, kann die Zwischenschicht auch als Unterkupferung bezeichnet werden.

Weiter wird vorgeschlagen, dass die Beschichtung aus Zinn in einem Galvanikverfahren aufgetragen wird und nach dem Auftragen einer Reflow-Behandlung unterzogen wird. In der Reflow-Behandlung wird das Zinn der Beschichtung nachträglich kurzzeitig wieder aufgeschmolzen. Dadurch kann eine ungünstige Gefügeausbildung in der Beschichtung wie z.B. mit langen Einkristallen (Whiskern) durch eine Rekristallisation nachträglich verbessert werden.

Weiter wird vorgeschlagen, dass das Kupferband an Luft ausgelagert wird. Durch die Auslagerung des Kupferbandes an Luft und die damit verbundene Abkühlung bildet sich die zur Hemmung der Cu3Sn Phase erforderliche Phase der ausscheidungsbildenden Elemente in einer Partikelgröße bzw. einer Gefügeform aus, welche die Nachfolgediffusion des Kupfers besonders effektiv hemmt. Durch die Auslagerung an Luft erfolgt der Abkühlprozess in einem ausreichend langem Zeitraum, welcher die Bildung der günstigen Ag3Sn Phase besonders positiv begünstigt.

Weiter wird zur Lösung der Aufgabe ein Steckverbinder aus einem Kupferband nach einem der Ansprüche 1 bis 9 oder aus einem nach einem Verfahren nach einem der Ansprüche 10 bis 13 hergestellten Kupferband vorgeschlagen. Der Steckverbinder wird aus dem beschichteten Kupferband herausgestanzt und durch ein Mehrfachumformwerkzeug in eine komplexe, vorbestimmte Geometrie gebogen.

Die Erfindung wird im Folgenden anhand bevorzugter Ausführungsformen unter Bezugnahme auf die beigefügte Figur näher erläutert. Dabei zeigen
- Fig. 1: einen Schnitt durch ein erfindungsgemäßes Kupferband mit einer Beschichtung aus Zinn; und
- Fig. 2: ein Ausschnitt eines durch die erfindungsgemäße Legierung ausgebildeten Gefüges der Beschichtung in vergrößerter Darstellung; und
- Fig. 3: verschiedene Gefügestrukturen nahe der Grenzschicht und in einem Abstand zu der Grenzschicht nach verschiedenen Abkühlverfahren.

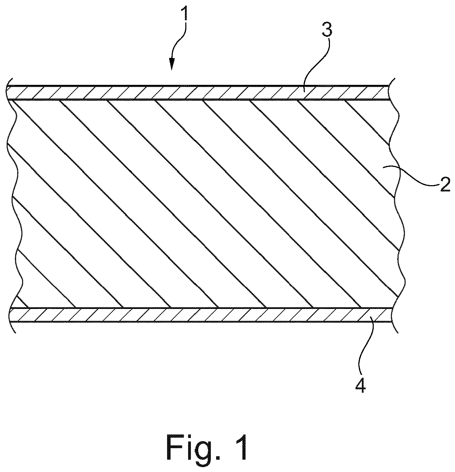

In der Figur 1 ist ein Ausschnitt eines erfindungsgemäßen Kupferbandes 1 zur Herstellung von elektrischen Kontakten mit einer beidseitigen Beschichtung 3, 4 aus Zinn (Sn) in Schnittdarstellung zu erkennen. Das Kupferband 1 weist einen Basiswerkstoff 2 aus einer bekannten Kupferlegierung auf, welche zur Verwirklichung der erfindungsgemäßen Lösung keinen besonderen Anforderungen genügen muss und insbesondere nicht verändert werden muss.

Der Basiswerkstoff 2 wird in einem Tauchverfahren beidseitig mit einer Beschichtung 3, 4 aus einer dünnen Schicht aus Zinn (Sn) beschichtet. Dieses Zinn enthält den erfindungsgemäß vorgeschlagenen Anteil an Silber. Silber ist ein Element, welches auch in kleinsten Mengen unlöslich in dem Zinn ist und damit bewusst Ausscheidungen bildet, hier die intermetallische Zwischenphase Ag3Sn. Die intermetallische Zwischenphase wird dabei beim Auftragen des Zinns in dem Tauchverfahren gebildet, wenn das Zinn auf dem Basiswerkstoff erstarrt. Ferner kann die Partikelgröße und Form auch nachträglich z.B. durch eine thermische Behandlung beeinflußt werden. Das Mengenverhältnis des Silbers zu dem Zinn ist dabei so gewählt, dass der Gewichtsanteil des Silbers in Bezug zu dem Zinn weniger als 0,5 Gewichtsprozent beträgt. Aus Kostengründen kann der Gewichtsanteil des teuren Silbers weiter auf unter 0,1 Gewichtsprozent oder sogar unter 0,05 Gewichtsprozent besonders bevorzugt bis 0,01 Gewichtsprozent reduziert werden. Auch diese sehr geringen Mengen des Silbers in der Beschichtung aus Zinn reichen aus, um eine ausreichende Zwischenphase Ag3Sn zu bilden, welche die Diffusion des Kupfers und damit die Entstehung der Cu3Sn-Phase hemmt und dadurch die Haftfestigkeit durch die vermiedenen Kirkendall-Poren erhöht.

Als unlösliche, ausscheidungsbildende Elemente kommen ferner Antimon (Sb), Germanium (Ge), Nickel (Ni), Wismut (Bi) und Cobalt (Co) in Frage. Unter dem Begriff unlöslich und ausscheidungsbildend soll dabei die Eigenschaft verstanden werden, Ausscheidungen in der Beschichtung zu erzeugen, welche entweder durch intermetallische Zwischenphasen des Elementes zusammen mit dem Zinn oder durch Ausscheidungen der Elemente selbst gebildet sein können. Diese Ausscheidungen dienen der Hemmung der Diffusion und der dadurch bewirkten Bildung der Cu3Sn-Phase, welche ursächlich für die Bildung der Kirkendall-Poren ist, sodass durch die zugegebenen Elemente die Bildung der Kirkendall-Poren reduziert und die Haftfestigkeit erhöht werden kann.

Das ausscheidungsbildende, unlösliche Element Silber ist hier durch ein Tauchverfahren, bevorzugt durch ein Feuerverzinnungsverfahren auf den Basiswerkstoff 2 aufgetragen worden. Es ist aber auch denkbar, das Silber und das Zinn in einem oder zwei Schritten jeweils in einem Galvanikverfahren und/oder in einer Kombination aus einem Tauchverfahren und einem Galvanikverfahren aufzutragen.

Dabei kann die Beschichtung 3, 4 zusätzlich in einem Reflow-Verfahren kurzzeitig wieder aufgeschmolzen werden, wodurch ungünstige Gefügeeigenschaften beseitigt werden können.

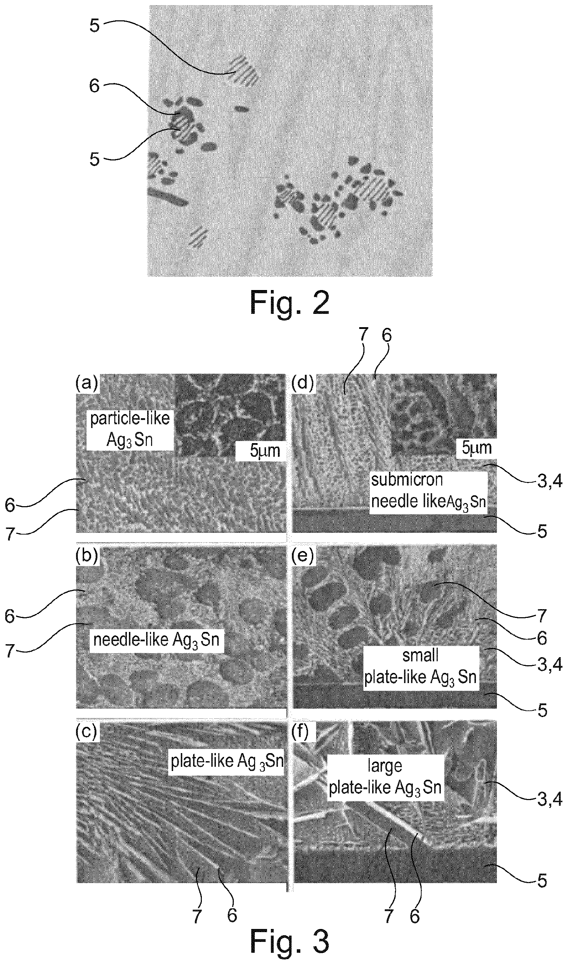

In der Figur 2 ist eine vergrößerte Gefügestruktur der zinnbasierten Beschichtung zu erkennen, welche durch eine Zugabe von Silber in einem Anteil von 0,08 bis 0,5 Gewichtsprozent in der Beschichtung 3,4 erzielt werden kann. Durch die Zugabe von Silber wird in der Beschichtung 3,4 und insbesondere in der in der Figur 3 zu erkennenden Grenzschicht 5 zu dem Basiswerkstoff 2 eine Ag3Sn Phase 6 gebildet, welche sich bevorzugt um die Cu6Sn5 Phase 5 herum ausbildet. Die Ag3Sn Phase 6 bildet dadurch eine Art Sperr- oder Hemmschicht zwischen der Cu6Sn5 Phase 5 und dem Zinn 7 aus, welche die Bildung der für die Kirkendall Poren ursächliche Cu3Sn Phase verhindert oder zumindest hemmt.

Die Ag3Sn Phase 6 bildet durch die Zugabe in dem vorgeschlagenen Anteilsbereich Körner mit einer Korngröße mit einem Flächenmittelwert von 0,01 bis 0,03 µm² bevorzugt von 0,0140 bis 0,0180 µm² und einem gemittelten Umfang von 0,2 bis 0,8 µm bevorzugt von 0,4 bis 0,6 µm aus, welche für den zu erreichenden Zweck der Hemmung der Ag3Sn Phase bei einer gleichzeitig möglichst geringen Menge an Silber optimal ist. Die Ag3Sn Phase 6 hemmt die Diffusion des für die Bildung der Cu3Sn Phase notwendigen Kupfers in dem an die Cu6Sn5 Phase 5 angrenzenden Bereich, so dass die Bildung der Cu3Sn Phase gehemmt wird. Dabei ist es für den zu erreichenden Zweck nicht zwangsläufig notwendig, dass die Cu6Sn5 Phase 5 vollständig durch die Ag3Sn Phase 6 umfasst ist. Es ist dabei auch nicht von Nachteil, wenn vereinzelte Körner der Cu6Sn5 Phase 5 nicht von einer Ag3Sn Phase 6 umfasst sind.

In der Figur 3 sind verschiedene Gefüge der Cu6Sn5 Phase 5 und der Ag3Sn Phase 6 zu erkennen, welche in den oberen beiden Darstellungen durch eine Abkühlung durch Wasser, in den mittleren Darstellung durch eine Abkühlung an Luft und in den unteren Darstellungen durch eine Abkühlung in einem Ofen entstehen. In den linken Darstellungen ist die Gefügestruktur in einem Abstand von einer nicht dargestellten Cu6Sn5 Phase 5 zu erkennen, während in den rechten Darstellungen jeweils die Gefügestruktur nahe der Cu6Sn5 Phase 5 zu erkennen ist.

Es ist in den oberen Darstellungen erkennbar, dass sich die Ag3Sn Phase 6 bei einer schnellen Abkühlung oder Auslagerung durch Wasser in einer Partikelstruktur zwischen einem Restanteil 7 des Zinns ausbildet, wobei die Gefügestruktur nahe der Cu6Sn5 Phase 5 noch feiner ist. In der mittleren Darstellung ist die Gefügestruktur nach einer Auslagerung des Kupferbandes 1 an Luft zu erkennen, in welcher der Restanteil 7 des Zinns aufgrund der längeren Abkühlphase zu gröberen Körnern herangewachsen ist, und die Ag3Sn Phase 6 in einer feinen Nadelstruktur zwischen dem Restanteil 7 Zinn angeordnet ist. Wie in der mittleren, rechten Darstellung zu erkennen ist, ist die Nadelstruktur der Ag3Sn Phase 6 dabei nahe der Cu6Sn5 Phase 5 deutlicher ausgeprägt. In den unteren Darstellungen ist erkennbar, dass die Ag3Sn Phase 6 bei einer Auslagerung im Ofen also bei noch längeren Abkühlzeiten ebenfalls zu einer noch ausgeprägten Nadelstruktur heranwächst und durch eine ebenfalls ausgeprägteren Nadelstruktur heranwächst.

Anhand der Gefügestrukturen ist erkennbar, dass durch eine Auslagerung an Luft eine erwünschte nadelförmige Morphologie der Ag3Sn Phase 6 und eine ausreichende Kapselung der Cu6Sn5 Phase 5 durch die Ag3Sn Phase 6 erreicht werden kann. Da die Auslagerung an Luft überdies die kostengünstigste Variante der Auslagerung ist, ist die Auslagerung an Luft hier das bevorzugte Auslagerungsverfahren.

Die Grenzschicht ist hier durch eine Schicht der Cu6Sn5 Phase 5 gebildet und weist eine Dicke von 10 bis 100 µm auf. Je nach dem Anteil des Silbers kann diese Grenzschicht dicker oder auch dünner ausgebildet sein, und sie kann zusätzliche Körner der Ag3Sn Phase 6 aufweisen.

Ein weiterer positiver Effekt der Zugabe der unlöslichen, ausscheidungsbildenden Elemente ist darin zu sehen, dass die Härte der Beschichtung 3,4 nach einer thermischen Behandlung bzw. Auslagerung erhöht wird und im Idealfall damit höher als die Härte des Basiswerkstoffs 2 ist. Im Fall der Zugabe von Silber als unlösliches, ausscheidungsbildendes Element bildet sich bei der Auslagerung die Ag3Sn-Phase 6 nach dem oben beschriebenen Prinzip und führt dadurch zu einer Erhöhung der Härte.

Dabei wird die Auslagerung bevorzugt in einem Temperaturbereich von 80 bis 150 °C über einen Zeitraum von 500 bis 1500 h Stunden vorgenommen, um den gewünschten Effekt und die Ausbildung der Gefügestruktur herbeizuführen.

## Patentansprüche

1. Kupferband (1) zur Herstellung von elektrischen Kontakten, mit
- einem Basiswerkstoff (2) aus Kupfer oder einer Kupferlegierung, und
- einer Beschichtung (3,4) aus Zinn, wobei
- die Beschichtung (3,4) aus Zinn einen Anteil von unlöslichen, ausscheidungsbildenden Elementen von 0,003 bis 1,0, bevorzugt bis 0,5, bevorzugt bis 0,05, besonders bevorzugt bis 0,01 Gewichtsprozent aufweist
**dadurch gekennzeichnet, dass**
- das unlösliche, ausscheidungsbildende Element Silber in einem Anteil von 0,08 bis 0,5 Gewichtsprozent in Form einer Ag3Sn Phase (6) in der Beschichtung (3,4) vorliegt.

2. Kupferband (1) nach Anspruch 1, **dadurch gekennzeichnet, dass**
- die unlöslichen, ausscheidungsbildenden Elemente zusätzlich durch eines oder mehrere der folgenden Elemente gebildet sind:
Germanium, Nickel, Cobalt in einem Anteil von jeweils 0,003 bis 0,5 Gewichtsprozent.

3. Kupferband (1) nach einem der Ansprüche 1 oder 2, **dadurch gekennzeichnet, dass**
- die Ag3Sn Phase (6) in der Beschichtung (3,4) in Partikelgrößen mit einem Flächenmittelwert von 0,01 bis 0,03 µm², bevorzugt von 0,0140 bis 0,0180 µm², vorhanden ist.

4. Kupferband (1) nach einem der Ansprüche 1 bis 3, **dadurch gekennzeichnet, dass**
- die Ag3Sn Phase (6) in der Beschichtung (3,4) in Partikelgrößen mit einem gemittelten Umfang von 0,2 bis 0,8 µm, bevorzugt von 0,4 bis 0,6 µm vorhanden ist.

5. Kupferband (1) nach einem der Ansprüche 1 bis 4, **dadurch gekennzeichnet, dass**
- in der Beschichtung (3,4) und/oder dem Basiswerkstoff (2) ein Anteil des Kupfers in einer Cu6Sn5 Phase (5) vorliegt, und die Ag3Sn Phase (6) im Bereich der Cu6Sn5 Phase (5) vorliegt oder diese umfasst.

6. Kupferband (1) nach Anspruch 5, **dadurch gekennzeichnet, dass**
- die Cu6Sn5 Phase (5) angrenzend zu einer Ag3Sn Phase (6) in oder angrenzend zu einer Grenzschicht zwischen dem Basiswerkstoff (2) und der Beschichtung (2,3) angeordnet ist.

7. Kupferband (1) nach einem der Ansprüche 1 bis 6, **dadurch gekennzeichnet, dass**
- die unlöslichen, ausscheidungsbildenden Elemente zusätzlich durch eines oder mehrere der folgenden Elemente gebildet sind:
Antimon oder Wismut in einem Anteil von jeweils 0,02 bis 1,0 Gewichtsprozent.

8. Kupferband (1) nach einem der Ansprüche 1 bis 7, **dadurch gekennzeichnet, dass**
- die Beschichtung (3,4) eine höhere Härte als der Basiswerkstoff (2) aufweist.

9. Verfahren zur Herstellung eines Kupferbandes (1) nach einem der Ansprüche 1 bis 8 zur Herstellung von elektrischen Kontakten, mit
- einem Basiswerkstoff (2) aus Kupfer oder einer Kupferlegierung, und
- einer Beschichtung (3,4) aus Zinn,
**dadurch gekennzeichnet, dass**
- die Beschichtung (3,4) aus Zinn in einem Tauchverfahren und/oder einem Galvanikverfahren mit einem Anteil von unlöslichen, ausscheidungsbildenden Element Silber in einem Anteil von 0,08 bis 0,5 Gewichtsprozent in Form einer Ag3Sn Phase (6) in der Beschichtung (3,4) auf den Basiswerkstoff (2) aufgetragen wird.

10. Verfahren nach Anspruch 9, **dadurch gekennzeichnet, dass**
- die unlöslichen, ausscheidungsbildenden Elemente in einem ersten Schritt in dem Galvanikverfahren auf dem Basiswerkstoff (2) abgeschieden werden, und
- die Beschichtung (3,4) aus Zinn in einem zweiten Schritt durch das Tauchverfahren aufgetragen wird.

11. Verfahren nach einem der Ansprüche 9 oder 10, **dadurch gekennzeichnet, dass**
- die Beschichtung (3,4) aus Zinn nach einem Galvanikverfahren aufgetragen wird und nach dem Auftragen einer Reflow-Behandlung unterzogen wird.

12. Verfahren nach einem der Ansprüche 9 bis 11, **dadurch gekennzeichnet, dass**
- das Kupferband (1) an Luft ausgelagert wird.

13. Steckverbinder aus einem Kupferband (1) nach einem der Ansprüche 1 bis 8 oder aus einem nach einem Verfahren nach einem der Ansprüche 9 bis 12 hergestellten Kupferband (1) .

## Claims

1. Copper strip (1) for making electrical contacts, with
- a base material (2) of copper or a copper alloy, and
- a coating (3,4) of tin, wherein
- the coating (3,4) of tin has a proportion of insoluble, precipitation-forming elements of 0.003 to 1.0, preferably up to 0.5, preferably up to 0.05, particularly preferably up to 0.01 weight percent, **characterized in that**
- the insoluble, precipitation-forming element silver is present in the coating (3,4) in a proportion of 0.08 to 0.5 weight percent in the form of an Ag3Sn phase (6).

2. Copper strip (1) according to claim 1, **characterized in that**
- the insoluble, precipitation-forming elements are additionally formed by one or more of the following elements: germanium, nickel, cobalt in a proportion of 0.003 to 0.5 weight percent each.

3. Copper strip (1) according to any one of claims 1 or 2, **characterized in that**
- the Ag3Sn phase (6) is present in the coating (3,4) in particle sizes with a mean area value of 0.01 to 0.03 µm², preferably from 0.0140 to 0.0180 µm².

4. Copper strip (1) according to any one of claims 1 to 3, **characterized in that**
- the Ag3Sn phase (6) is present in the coating (3,4) in particle sizes with an average circumference of 0.2 to 0.8 µm, preferably 0.4 to 0.6 µm.

5. Copper strip (1) according to one of claims 1 to 4, **characterized in that**
- in the coating (3,4) and/or the base material (2) a portion of the copper is present in a Cu6Sn5 phase (5), and the Ag3Sn phase (6) is present in the area of or envelops the Cu6Sn5 phase (5).

6. Copper strip (1) according to claim 5, **characterized in that**
- the Cu6Sn5 phase (5) is arranged adjacent to an Ag3Sn phase (6) in or adjacent to a boundary layer between the base material (2) and the coating (2, 3).

7. Copper strip (1) according to any one of claims 1 to 6, **characterized in that**
- the insoluble, precipitation-forming elements are additionally formed by one or more of the following elements: antimony or bismuth in a proportion of 0.02 to 1.0 weight percent each.

8. Copper strip (1) according to one of claims 1 to 7, **characterized in that**
- the coating (3,4) has a higher hardness than the base material (2).

9. Process for producing a copper strip (1) according to one of claims 1 to 8 for the manufacture of electrical contacts, with
- a base material (2) of copper or a copper alloy, and
- a coating (3,4) of tin,
**characterized in that**
- the coating (3, 4) of tin is applied to the base material (2) in a dipping process and/or an electroplating process with a proportion of insoluble, precipitation-forming element silver in the coating (3,4) in a proportion of 0.08 to 0.5 weight percent in the form of an Ag3Sn phase (6).

10. Process according to claim 9, **characterized in that**
- the insoluble, precipitation-forming elements are deposited on the base material (2) in a first step in the electroplating process, and
- the coating (3,4) of tin is applied in a second step by the dipping process.

11. Process according to one of claims 9 or 10, **characterized in that**
- the tin coating (3,4) is applied by an electroplating process and is subjected to a reflow treatment after application.

12. Process according to one of claims 9 to 11, **characterized in that**
- the copper strip (1) is exposed to air.

13. Connectors made from a copper strip (1) according to one of claims 1 to 8 or from a copper strip (1) produced by a process according to one of claims 9 to 12.

## Revendications

1. Bande de cuivre (1) destinée à la fabrication de contacts électriques, pourvue
- d'un matériau de base (2) à base de cuivre ou d'un alliage de cuivre, et
- d'un revêtement (3, 4) à base d'étain, dans laquelle
- le revêtement (3, 4) à base d'étain présente une proportion d'éléments insolubles, formant une précipitation, de 0,003 à 1,0, de préférence jusqu'à 0,5, de préférence jusqu'à 0,05, de manière particulièrement préférée jusqu'à 0,01 pourcents en poids, **caractérisée en ce que**
- l'élément argent insoluble, formant une précipitation est présent dans une proportion de 0,08 à 0,5 pourcents en poids sous la forme d'une phase Ag₃Sn (6) dans le revêtement (3, 4).

2. Bande de cuivre (1) selon la revendication 1, **caractérisée en ce que**
- les éléments insolubles, formant une précipitation sont en outre formés par un ou plusieurs parmi les éléments suivants :
germanium, nickel, cobalt, respectivement dans une proportion de 0,003 à 0,5 pourcents en poids.

3. Bande de cuivre (1) selon l'une des revendications 1 ou 2, **caractérisée en ce que**
- la phase Ag₃Sn (6) dans le revêtement (3, 4) est présente dans des tailles particulaires avec une valeur moyenne de surface de 0,01 à 0,03 µm², de préférence de 0,0140 à 0,0180 µm².

4. Bande de cuivre (1) selon l'une des revendications 1 à 3, **caractérisée en ce que**
- la phase Ag₃Sn (6) dans le revêtement (3, 4) est présente dans des tailles particulaires avec un périmètre moyen de 0,2 à 0,8 µm, de préférence de 0,4 à 0,6 µm.

5. Bande de cuivre (1) selon l'une des revendications 1 à 4, **caractérisée en ce que**
- dans le revêtement (3, 4) et/ou dans le matériau de base (2), il y a une proportion de cuivre dans une phase Cu6Sn5 (5), et la phase Ag₃Sn (6) est présente dans la zone de la phase Cu6Sn5 (5) ou comprend celle-ci.

6. Bande de cuivre (1) selon la revendication 5, **caractérisée en ce que**
- la phase Cu6Sn5 (5) est disposée à la limite avec une phase Ag₃Sn (6) dans ou à la limite d'une couche limitrophe entre le matériau de base (2) et le revêtement (2, 3).

7. Bande de cuivre (1) selon l'une des revendications 1 à 6, **caractérisée en ce que**
- les éléments insolubles, formant une précipitation sont en outre formés par un ou plusieurs des éléments suivants :
antimoine ou bismuth, respectivement dans une proportion de 0,02 à 1,0 pourcents en poids.

8. Bande de cuivre (1) selon l'une des revendications 1 à 7, **caractérisée en ce que**
- le revêtement (3, 4) présente une dureté plus importante que le matériau de base (2).

9. Procédé de fabrication d'une bande de cuivre (1) selon l'une des revendications 1 à 8 destinée à la formation de contacts électriques, pourvue
- d'un matériau de base (2) à base de cuivre ou d'un alliage de cuivre, et
- d'un revêtement (3, 4) à base d'étain, **caractérisé en ce que**
- le revêtement (3, 4) à base d'étain est appliqué sur le matériau de base (2) dans un procédé par immersion et/ou un procédé de galvanisation avec une proportion d'élément argent insoluble, formant une précipitation, dans une proportion de 0,08 à 0,5 pourcents en poids sous la forme d'une phase Ag3Sn (6) dans le revêtement (3, 4) sur le matériau de base (2).

10. Procédé selon la revendication 9, **caractérisé en ce que**
- les éléments insolubles, formant une précipitation sont précipités dans une première étape dans le procédé de galvanisation sur le matériau de base (2), et
- le revêtement (3, 4) à base d'étain est appliqué dans une deuxième étape par le procédé d'immersion.

11. Procédé selon l'une des revendications 9 ou 10, **caractérisé en ce que**
- le revêtement (3, 4) à base d'étain est appliqué selon un procédé de galvanisation et est soumis à un traitement de refusion après l'application.

12. Procédé selon l'une des revendications 9 à 11, **caractérisé en ce que**
- la bande de cuivre (1) est transférée à l'air.

13. Connecteur enfichable à base d'une bande de cuivre (1) selon l'une des revendications 1 à 8 ou d'une bande de cuivre (1) fabriquée d'après un procédé selon l'une des revendications 9 à 12.
